# EUROPÄISCHE PATENTSCHRIFT

(11) **EP 4 146 121 B1**
(45) Veröffentlichungstag und Bekanntmachung des Hinweises auf die Patenterteilung: **31.07.2024**
(21) Anmeldenummer: 21725711.2
(22) Anmeldetag: 03.05.2021
(51) Int. Cl.: A61C 17/08, A61C 17/10, A61C 17/06, A61C 5/90

(54) **WANGENHALTER**
CHEEK RETRACTOR
ÉCARTEUR DE JOUE

(30) Priorität: 03.05.2020 DE 102020002627
(43) Veröffentlichungstag der Anmeldung: 15.03.2023
(73) Patentinhaber: Zipprich, Holger, 64342 Malchen (DE)
(72) Erfinder: Zipprich, Holger, 64342 Malchen (DE)
(74) Vertreter: Tergau & Walkenhorst Intellectual Property GmbH
(86) Internationale Anmeldenummer: PCT/EP2021/061603
(87) Internationale Veröffentlichungsnummer: WO 2021/224197

(56) Entgegenhaltungen:
- EP-A1- 3 360 508
- CN-U- 210 019 748

## Beschreibung

Die Erfindung bezieht sich auf einen Wangenhalter, insbesondere zum Offenhalten des Patientenmundes während einer Behandlung im Mund- oder Rachenraum oder einer dentalen Behandlung, mit einer Lippen-Halteschale, in die bei der Behandlung ein Teil der Lippe, beispielsweise im Mundwinkelbereich, eingelegt werden kann.

Wangenhalter der genannten Art werden vielfach bei zahnärztlichen Eingriffen oder Behandlungen eingesetzt, um den Patientenmund während der Behandlung offenzuhalten und damit den Zugriff des Behandlers in die Mundhöhle zu erleichtern. Ein solcher Wangenhalter umfasst dabei üblicherweise eine Lippen-Halteschale, in die bei der Behandlung ein Teil der Lippe eingelegt werden kann. Diese kann dann beispielsweise in einer einseitigen Ausführung des Wangenhalters in einen Mundwinkel des Patienten einlegbar sein, so dass sie die Lippe schützt und mit Zug auf einen angeformten Wangenhaltergriff die Wange wegzieht, um den Zugang zur Mundhöhle zu vergrößern. Demgegenüber sind auch doppelseitige Wangenhalter üblich, bei denen zwei Lippen-Halteschalen über ein bogenförmiges, meist leicht federndes Verbindungselement miteinander verbunden sind. Dabei können die Lippen-Halteschalen in die beiden Mundwinkel eingelegt werden, und über das Verbindungselement werden die Mundwinkel dann entsprechend auseinandergedrückt, so dass der Mund zur Behandlung offen gehalten werden kann, ohne dass durch das Personal andauernd Zug oder eine Haltekraft auf die Lippen-Halteschalen händisch ausgeübt werden müsste.

Des Weiteren sind auch Wangenhalter bekannt mit einer durchgängigen, die Lippen des Patienten entlang der gesamten Lippenstrecke oder Lippenkontur vollständig aufnehmenden Lippen-Halteschale (im englischen Sprachraum auch als "Mouth Prop" bezeichnet). Diese bestehen üblicherweise aus einem elastischen Basismaterial, das bei der Einbringung in den Patientenmund, d. h. beim Einlegen der Lippe in die umlaufende Lippen-Halteschale, mehr oder weniger leicht verformt wird und anschließend, nach dem Loslassen durch den Behandler, aufgrund der Rückstellkräfte den Mund des Patienten geöffnet hält.

Bei einer zahnärztlichen Behandlung können abhängig von der Therapie und/oder abhängig vom verwendeten Therapieverfahren Aerosole entstehen. Dabei handelt es sich meist um Aerosole mit einem hohen Wasseranteil. Beispielsweise beim Bohren oder Schleifen mit hohen Drehzahlen müssen nämlich die Bohrer bzw. Schleifer mit einem geeigneten Kühlmedium, meist auf Wasserbasis, gekühlt werden. Meist handelt es sich bei diesem Kühlmedium selbst um ein Aerosol aus Luft und Wasser. Aber auch bedingt durch die hohe Drehzahl der Bohrer bzw. Schleifer von bis zu ca. 120.000 U/min bilden sich Aerosole aus Luft, Wasser, den abgelösten Substanzen (meist Zahnhartsubstanz), aber auch Hart- & Weichgewebe und Körperflüssigkeiten (Speichel, Blut, Biofilm etc.). Andere Verfahren nutzen sogar Aerosole (Luft-Pulver-Wasser), welche mit Druck Zähne oder Zahnersatz von Biofilmen befreien sollen.

Der Behandler und seine Assistenz sind üblicherweise bemüht, diese verwendeten oder entstehenden Aerosole mit einem Sauger abzusaugen. Eine zu starke Absaugung würde allerdings den Einsatz und die Wirkung des Aerosols bzw. des verwendeten Wassers zur Kühlung negativ beeinflussen. Folglich kommt es bei einer solchen Behandlung sehr wahrscheinlich dazu, dass die Aerosole nicht gänzlich im Mundraum verbleiben, sondern aus der Mundhöhle entweichen oder sogar aus dem Mund herausspritzen. Dies birgt Gefahren für den Behandler, seine Assistenz und alle Menschen, die sich im näheren Umfeld der Behandlung befinden, da diese Aerosole nicht unmittelbar zu Boden sinken, sondern sich über längere Zeit in der Luft aufhalten.

Professionelle Zahnreinigungen (PZR) werden sehr effizient und sehr zuverlässig mit einem Luft-Pulver-Wasser-Spray durchgeführt. Hierbei wird ein Aerosolgemisch aus Luft, Pulver (meist Glycin-Partikel) und Wasser mit einem Druck zur Entfernung von Biofilmen und Belägen auf Zähnen und Zahnersatz eingesetzt.

Aber auch beim Beschleifen von Zähnen wird ein Aerosol aus Luft und Wasser zur Kühlung des Schleifprozesses verwendet. Die Kühlung ist unter anderem notwendig zur Schonung des Nervs innerhalb des Zahnes und zur Vermeidung von dessen Schädigung. Bei einer Erhöhung der Temperatur des Nervs von ca. 5,5 °C kann dieser bereits geschädigt werden und sogar absterben.

Dieser Umstand der Freisetzung von Aerosolen und/oder anderen Tropfen oder Spritzern aus der Mundhöhle des Patienten ist aus hygienischen Gründen ebenso wie aus Gründen des Gesundheitsschutzes für das behandelnde Personal nicht befriedigend. Die vermutlich größte Gefahr durch Aerosole, welche die Mundhöhle verlassen, besteht dabei in der Übertragung von Bakterien, Viren und Pilzen von Mensch zu Mensch. Insbesondere in den heutigen Zeiten von Covid-19 hat dieser Punkt eine neue und entscheidende Bedeutung gewonnen. Die Hygienekonzepte verschiedener Institutionen untersagen bereits Therapien, bei welchen Aerosole freigesetzt werden, und zwar unabhängig davon, ob diese selbst Teil der Therapie sind oder nur als Nebenprodukt der Therapie entstehen. Insbesondere die mögliche Gefährdung des Personals durch Ansteckung mit dem Corona-Virus wurde als zu hoch eingestuft. Derartige Behandlungen dürfen wenn überhaupt meist nur mit dem Tragen einer FFP-2-Maske und einem Gesichtsvisier durchgeführt werden.

In der Arbeitsmedizin bzw. -sicherheit wird als Ansatz diesbezüglich von der Hierarchie her zuerst die Vermeidung der Gefährdung durch die Beseitigung der Gefahrenquelle in Betracht gezogen. Mit einem Behandlungsverbot kann dies umgesetzt werden. Hieraus folgt jedoch, dass viele notwendige Behandlungen nicht durchgeführt werden können oder dürfen. Die Nichtdurchführung notwendiger Therapien schützt zwar das behandelnde Personal, führt aber meist zu einer Verschlechterung der Mundgesundheit des Patienten. Zusätzlich führt eine dadurch bedingte Verzögerung einer Behandlung oftmals dazu, dass eine ursprünglich vergleichsweis einfache Therapie zu einem späteren Zeitpunkt deutlich aufwendiger, mit erhöhtem Risiko für den Behandlungserfolg und zudem deutlich kostenintensiver nachzuholen ist.

Ein anderer Weg der Vermeidung der genannten Gefährdung wäre die Auswahl eines anderen, alternativen Therapieverfahren, bei welchem keine Aerosole frei werden. Bezogen auf eine PZR stünden dabei beispielsweise allerdings allenfalls schlechtere Therapieverfahren zur Auswahl, und bei dem Beschleifen von Zähnen stehen ebenfalls keine adäquaten Verfahren zur Verfügung.

Die zweite Stufe der Vermeidung einer Gefährdung in der Arbeitssicherheit ist das räumliche Trennen der Gefahrenquelle vom Mitarbeiter, und die dritte Stufe wäre die Verwendung von persönlicher Schutzausrüstung (PSA) wie z. B. die Verwendung von Mund- und Nasenschutz, Schutzbrillen /-visiere und Handschuhen. Die Verwendung der üblichen PSA bei dentalen Behandlungen gibt allerdings keinen 100-prozentigen Schutz gegenüber der Übertragung von Corona-Viren auf das behandelnde Personal.

Mehr noch, CN 210 019 748 U offenbart einen Wangenhalter, insbesondere zum Offenhalten des Patientenmundes während einer Behandlung im Mund- oder Rachenraum oder einer dentalen Behandlung, mit einer die Lippen des Patienten entlang der gesamten Lippenstrecke oder Lippenkontur vollständig aufnehmenden Lippen-Halteschale, an der eine Anzahl von mit einem Absaugsystem verbundenen Ansaugöffnungen angeordnet sind. Der Erfindung liegt daher die Aufgabe zugrunde, insbesondere zur Verbesserung des Arbeitsschutzes des behandelnden Personals eine Vorrichtung anzugeben, mit der der Austritt von Aerosolen aus der Mundhöhle während der Behandlung eines Patienten in besonderem Maße reduziert oder möglicherweise vollständig vermieden werden kann. Diese Aufgabe wird erfindungsgemäß gelöst mit einem Wangenhalter der oben genannten Art, an dessen Lippen-Halteschale eine Anzahl von mit einem Absaugsystem verbundenen Ansaugöffnungen angeordnet ist.

Die Erfindung ist definiert durch einen Wagenhalter mit den Merkmalen des Anspruchs 1. Bevorzugte Ausführungsformen der Erfindung sind in den abhängigen Ansprüchen definiert. Die Erfindung geht dabei von der Überlegung aus, dass im Hinblick auf die gerade be erhöhtem Schutzbedürfnis beispielsweise gegenüber einer Ansteckung mit dem Corona-Virus als nur unbefriedigend angesehene Schutzwirkung der üblichen PSA konsequent die genannte zweite Stufe der Vermeidung von Gefährdungen im Arbeitsschutz verfolgt werden sollte, um die Übertragung von Bakterien, Viren und Pilzen auf das behandelnde Personal zu vermindern oder möglichst ganz zu vermeiden. Hierzu wird es als erstrebenswert angesehen zu vermeiden oder zu minimieren, dass Aerosole die Mundhöhle überhaupt verlassen. Dies könnte grundsätzlich erreicht werden durch eine weitgehende oder vollständige Absaugung der Aerosole direkt am Entstehungsort, also im Inneren der Mundhöhle, was andererseits jedoch negative Effekte auf die Effizienz der gewünschten Therapie haben könnte, so dass dies nicht als sinnvoll erachtet wird. Jegliche zusätzlich in die Mundhöhle einzubringende Absaugung würde zudem die Sicht auf die Behandlung selbst und den ohnehin stark eingeschränkten Platz zur Ausführung der Therapie selbst massiv einschränken. Daher sollte eine Absaugung der Aerosole im Austrittsbereich aus der Mundhöhle, also insbesondere im Bereich der Lippenkontur des Patienten, vorgesehen sein.

Um dies auf besonders einfache und damit effiziente Weise zu ermöglichen, ist die Bereitstellung einer für die Abführung auch von Aerosolen geeigneten Absaugung unter Rückgriff auf ein ohnehin häufig bei dentalen Behandlungen zum Einsatz kommenden Instrument vorgesehen. Dementsprechend sollte ein Wangenhalter der oben genannten Art für eine solche Absaugung geeignet ertüchtigt werden. Im Sinne der Erfindung dient der Wangenhalter somit in der Art eines Trägerelements dazu, die Ansaugöffnungen des Absaugsystems an einer als hierfür besonders geeignet angesehenen Position, nämlich erfindungsgemäß in unmittelbarer oder zumindest weitgehender räumlicher Nähe zur Lippenkontur des Patienten, anzuordnen.

Das Absaugsystem umfasst dabei vorteilhafterweise eine insbesondere im Hinblick auf die Saugleistung geeignet gewählte Pumpen- oder Saugeinheit, die an ein Saugkanal-System angeschlossen ist, das seinerseits in den genannten Ansaugöffnungen mündet. Das endseitige Kanalsegment dieses Kanalsystems, also insbesondere das in den Ansaugöffnungen mündende Endkanalstück, ist dabei vorteilhafterweise in den Wangenhalter integriert. Die Ansaugöffnungen sind dabei ihrerseits wiederum in besonders vorteilhafter Ausgestaltung für eine besonders wirkungsvolle Ansaugung des aus der Mundhöhle des Patienten abströmenden Atem- oder Luftstroms ausgelegt und positioniert; dementsprechend weisen sie besonders bevorzugt bei eingesetztem Wangenhalter in Richtung der Mundhöhle des Patienten.

Um eine besonders wirkungsvolle Absaugung der Abgase aus der Mundhöhle sicherzustellen, sollten die Ansaugöffnungen räumlich besonders nah an der durch die Lippen oder Lippenkontur definierten Mundöffnung positioniert sein. Um dem Rechnung zu tragen, sind die Ansaugöffnungen in weiterer besonders vorteilhafter Ausgestaltung höchstens 25 mm, vorzugsweise höchstens 20 mm, besonders bevorzugt höchstens 10 mm, versetzt zur Trennebene zwischen dem sogenannten "intraoralen" oder inneren Bereich der Mundhöhle und dem sogenannten "extraoralen" oder äußeren Bereich der Mundhöhle positioniert. Die genannte "Trennebene" entspricht dabei weitgehend der Ebene der Mundöffnung an sich.

Entlang der Lippenkontur oder die "Lippenstrecke", vorliegend definiert als die Gesamtstrecke gebildet aus der Strecke, welche sich aus der Oberlippe des Patienten ergibt, und der Strecke, welche sich aus seiner Unterlippe ergibt, sind mehrere Positionierungsmöglichkeiten für geeignet gewählte Ansauglöcher denkbar. Wünschenswert und besonders bevorzugt ist ein Ansatz, bei dem die gesamte Lippenstrecke des Patienten mit Ansauglöchern der genannten Art versehen ist. Insbesondere aufgrund der üblicherweise sehr individuellen und unterschiedlichen Lippenstrecken unterschiedlicher Patienten kann es aber unmöglich erscheinen, die gesamte Lippenstrecke mit Ansaugöffnungen zu versehen. Erfindungsgemäß sind mindestens 50 % und in besonders bevorzugter Ausgestaltung mindestens 75 % der Lippenstrecke mit einer zugeordneten Absaugung bzw. Ansaugöffnungen versehen.

In einer besonders bevorzugten Weiterbildung der Erfindung ist dem Umstand Rechnung getragen, dass üblicherweise das behandelnde Personal bei der Behandlung Handschuhe trägt. Diese könnten versehentlich über die Ansaugöffnungen angesaugt werden und damit das Personal in der Handhabung behindern. Um dem auf besonders einfache und zuverlässige Weise entgegen zu wirken, sollte der Wangenhalter dafür ausgelegt sein, dass ein direkter flächiger Kontakt von Handschuhen oder Fingern mit der eigentlichen Luftdurchtrittsfläche der Ansaugöffnungen vermieden oder zumindest minimiert wird. Hierzu sind in einer besonders bevorzugten, ebenfalls als eigenständig erfinderisch angesehen Ausführung des Wangenhalters in der Nähe der Ansauglöcher Abstandshalter oder Abhalterippen vorgesehen. Diese führen dazu, dass, zumindest wenn die Handschuhe sehr passgenau auf den Händen sitzen, die Handschuhe keinen direkten Kontakt zu den Ansaugöffnungen haben können.

In weiterer besonders bevorzugter Ausgestaltung ist zudem dem Umstand Rechnung getragen, dass bei der zugrundeliegenden Behandlung des Patienten, insbesondere bei einer Zahnreinigung (PZR), verschiedenste Medien in die Mundhöhle eingebracht werden. Um auch vor diesem Hintergrund eine zuverlässige Absaugung gerade auch von Aerosolen sicherzustellen, wird es als besonders vorteilhaft angesehen, wenn die Absaugleitung bzw. das Absaugvolumen möglichst in Summe mit der Absaugleitung bzw. dem Absaugvolumen der unter Umständen zusätzlich eingebrachten absaugenden Instrumente mindestens gleich hoch ist wie das in die Mundhöhle eingebrachte Volumen an Flüssigkeiten, Gasen und Feststoffen, meist in Form von Luft, Wasser und Pulver (bei einer PZR). Zusätzlich kann auch das Ausatemvolumen des Patienten mit in die Berechnung des minimal nötigen Absaugvolumens einbezogen werden. Meist ist es jedoch so, dass der Patient während des Einbringens von Flüssigkeit, Gasen und oder Feststoffen (z. B. Kühlung beim Beschleifen, Luft-Pulver-Wasser-Spray [PZR], Luft-Wasser Gemisch, Luft etc.) mit der Zunge den Rachenraum verschließt und durch die Nase atmet, um das Verschlucken der eingebrachten Medien zu vermeiden. Das bevorzugt vorgesehene Absaugvolumen, d. h. der Absaug-Volumenstrom, und damit die gewählte Absaugleistung des Absaugsystems sollte unter Berücksichtigung dieser Aspekte mindestens 120 %, vorzugsweise mindestens 150 % und in besonders bevorzugter Ausgestaltung 200 % des Volumenstroms der eingebrachten Medien betragen. In besonders bevorzugter und als eigenständig erfinderisch angesehener Ausgestaltung ist das Absaugsystem und insbesondere die diesem zugeordnete Absaugpumpe für eine Saugleistung von mindestens 400 l/min, besonders bevorzugt von mindestens 500 l/min, ganz besonders bevorzugt von mindestens 750 l/min, ausgelegt.

Die mit der Erfindung erzielten Vorteile bestehen insbesondere darin, dass durch die Bereitstellung eines dentalen Wangenhalters mit daran angebrachter oder darin integrierter Absaugung die Freisetzung von Aerosolen aus der Mundhöhle während oder infolge der Behandlung weitgehend oder möglicherweise sogar vollständig unterbunden oder vermieden werden kann. Damit ist sichergestellt, dass es nicht oder allenfalls in sehr geringem Umfang zu einer Übertragung von Bakterien, Viren oder Pilzen auf das behandelnde Personal kommen kann. Der Wangenhalter weist hierfür eine Anzahl von Ansaugöffnungen auf, über die die Aerosole abgesaugt werden können. Die Ansaugöffnungen sind entlang der Lippenstrecke angeordnet, um eine möglichst gleichmäßige Absaugung der Mundhöhle zu ermöglichen.

Bei einer PZR und bei der zahnärztlichen Behandlung werden die oral Luft, Wasser und Aerosol einbringenden Instrumente und die entsprechend absaugenden Instrumente nicht zeitgleich gestartet und ausgeschaltet. Insbesondere bei der zahnärztlichen Behandlung werden die Luft, Wasser und Aerosol einbringenden Instrumente von dem Zahnarzt /-ärztin gesteuert (gestartet und gestoppt) und die absaugenden Instrumente von der zahnmedizinischen Assistentin. Dies führt unter einem Zeitdruck häufig dazu, dass die Absaugung mit einer geringen Verzögerung gestartet wird und auch wieder gestoppt werden, bevor alle im Patientenmund vorhandenen Aerosole abgesaugt sind. Bei der hier vorliegenden Erfindung ist besonders zu erwähnen, dass die am Wangenhalter angebrachte oder integrierte Absaugung unabhängig von den Tätigkeiten des Behandlers und der Assistenz ist. Somit kann die Absaugung vorzeitig gestartet und nach dem Entfernen aller Instrumente aus dem Mundraum noch kurzzeitig länger zum Absaugen betrieben werden. Dies vermeidet bzw. unterbindet ungewollte Aerosolaustritte aus dem Mundraum.

Ein Ausführungsbeispiel der Erfindung wird anhand einer Zeichnung näher erläutert. Darin zeigen:
- FIG. 1: einen Wangenhalter herkömmlicher Ausführung in einseitiger Ausführung in Draufsicht (FIG. 1a), in seitlicher Ansicht (FIG. 1b) und in perspektivischer Ansicht (FIG. 1c),
- FIG. 2: einen Wangenhalter herkömmlicher Ausführung in doppelseitiger Ausführung in Draufsicht (FIG. 2a), in seitlicher Ansicht (FIG. 2b) und in perspektivischer Ansicht (FIG. 2c),
- FIG. 3: einen Wangenhalter mit integriertem Absaugsystem in einseitiger Ausführung in perspektivischer Ansicht (FIG. 3a) und perspektivisch geschnitten (FIG. 3b),
- FIG. 4: einen Wangenhalter mit integriertem Absaugsystem in doppelseitiger Ausführung in seitlicher (FIG. 4a) und perspektivischer Ansicht (FIG. 4b),
- FIG. 5: eine Lippen-Halteschale, insbesondere zur Verwendung in einem Wangenhalter gem. FIG. 3 oder 4,
- FIG. 6: einen bekannten, am Markt erhältlichen Wangenhalter "OptraGate^{®}" in verkaufsfertigem Zustand in perspektivischer (FIG. 6a) und seitlicher Ansicht (FIG. 6b.) sowie ausschnittsweise im Längsschnitt (FIG. 6c),
- FIG. 7: den Wangenhalter "OptraGate^{®}" in eingesetztem Zustand in perspektivischer (FIG. 7a) und seitlicher Ansicht (FIG. 7b.) sowie ausschnittsweise im Längsschnitt (FIG. 7c),
- FIG. 8: ausschnittsweise den Patientenmund mit eingesetztem Wangenhalter "OptraGate^{®}" in Front- (FIG. 8a) und perspektivischer Ansicht (FIG. 8b),
- FIG. 9: ausschnittsweise den Kieferbereich eines Patienten im Längsschnitt ohne (FIG. 9a) und mit (FIG. 9b) eingesetztem Wangenhalter "OptraGate^{®}",
- FIG. 10: einen erfindungsgemäß auf der Grundlage des Wangenhalters gem. FIG. 6, 7 weitergebildeten Wangenhalter in eingesetztem Zustand in perspektivischer (FIG. 10a) und seitlicher Ansicht (FIG. 10b) sowie ausschnittsweise im Längsschnitt (FIG. 10c),
- FIG. 11: ausschnittsweise den Patientenmund mit eingesetztem erfindungsgemäß weitergebildetem Wangenhalter in Front- (FIG. 11a) und perspektivischer Ansicht (FIG. 11b),
- FIG. 12: ausschnittsweise den Kieferbereich eines Patienten im Längsschnitt mit eingesetztem Wangenhalter,
- FIG. 13: ein Schlauchsystem zur Bereitstellung eines Absaugkanals,
- FIG. 14: ein weiteres Schlauchsystem zur Bereitstellung eines Absaugkanals,
- FIG. 15: ein als federnde Stützstruktur für einen Wangenhalter ausgestaltetes Schlauchsystem in Frontal- (FIG. 15a) und perspektivischer (FIG. 15b) Ansicht, und
- FIG. 16: eine alternative Ausführungsform eines als federnde Stützstruktur für einen Wangenhalter ausgestalteten Schlauchsystem in Frontal- (FIG. 16a) und perspektivischer (FIG. 16b) Ansicht.

Gleiche Teile sind dabei in allen Figuren mit denselben Bezugszeichen versehen.

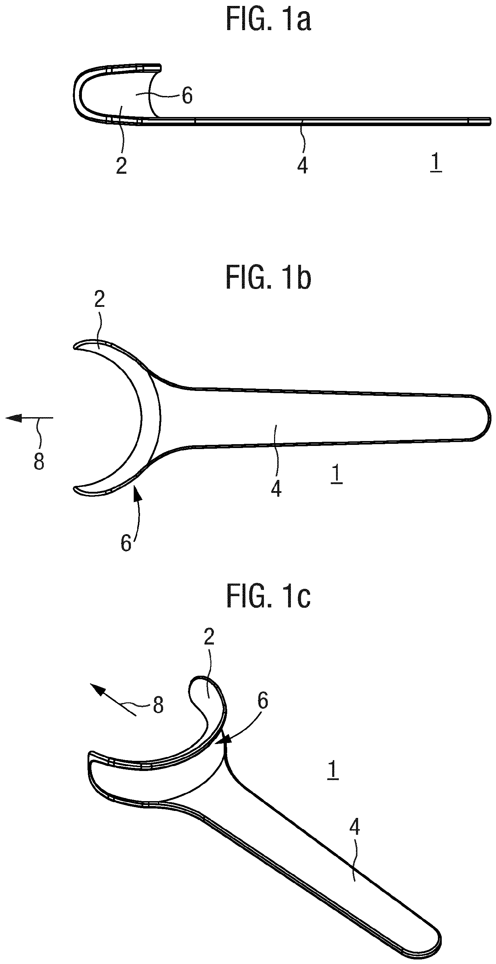

Der in herkömmlicher Bauweise ausgeführte Wangenhalter 1 gem. FIG. 1 wird üblicherweise im Rahmen einer Behandlung in der Mundhöhle eines Patienten verwendet, um den Zugang zur Behandlung in der Mundhöhle zu verbessern. Derartige Wangenhalter 1 können im Mundwinkel und/oder an anderen Bereichen der Wange und der Lippe des Patienten zum Einsatz kommen und diese abhalten, um den Zugang in die Mundhöhle zu vergrößern. Der Wangenhalter 1 umfasst dazu eine auch als Wangenansatz bezeichnete Lippen-Halteschale 2, die in der gezeigten Ausführung in der Art eines Halbkreisprofils ausgestaltet ist. In diese Lippen-Halteschale 2 kann bei der Behandlung ein Teil der Lippe, beispielsweise im Mundwinkelbereich, eingelegt werden. Dazu ist die Lippen-Halteschale 2 in der gezeigten Ausführung halbkreisförmig aufgespannt, so dass sie besonders gut in einen Mundwinkel einlegbar ist, die Lippe schützt und mit Zug auf einen angeformten Wangenhaltergriff 4 die Wange wegzieht, um den Zugang zur Mundhöhle zu vergrößern. Die Lippe des Patienten wird dabei von der Lippen-Halteschale 2 teilweise umschlossen, damit sie nicht wegrutschen kann. Die Lippenauflage 6 der Lippen-Halteschale 2, in welche die Lippe eingelegt wird und von welcher die Lippe teilweise umschlossen wird, um einen besseren Halt zu gewährleisten, ist dabei auf der konkav ausgebildeten Seite der Lippen-Halteschale 2 vorgesehen. Die der Lippenauflage 6 bezogen auf die Lippen-Halteschale 2 gegenüberliegende Seite, wie durch den Pfeil 8 angedeutet, weist dabei in Richtung in die Mundhöhle hinein. Bei dieser Art der Wangenhalter 1 (einfacher Wangenhalter) ist es allerdings nachteilig, dass dieser während der Behandlung mit einer Hand gehalten werden muss.

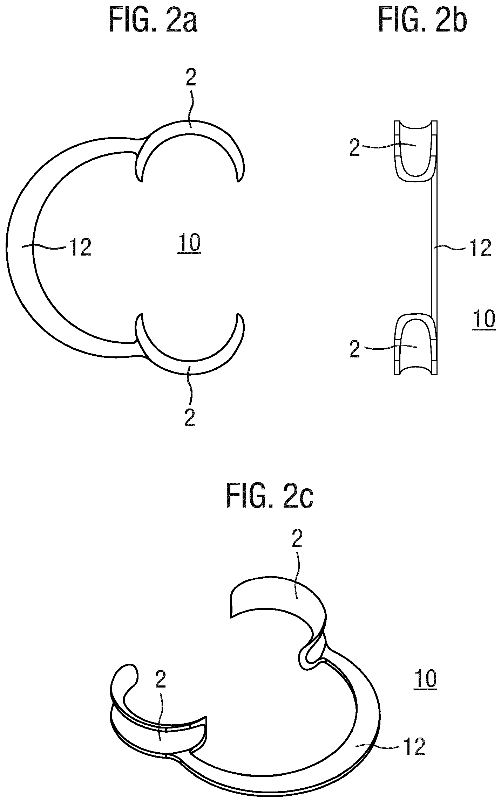

Zur Vermeidung der Notwendigkeit der Verwendung einer Hand zum Abhalten der Wange kann demgegenüber auch ein ebenfalls herkömmlicher Wangenhalter 10 in doppelseitiger Ausgestaltung verwendet werden, wie er in FIG. 2 gezeigt ist. Dieser zeichnet sich dadurch aus, dass er zwei Lippen-Halteschalen 2 umfasst, welche jeweils endseitig an einem gemeinsamen Verbinderelement 12 angeordnet sind. Die beiden Lippen-Halteschalen 2 werden bei der Behandlung in den linken und in den rechten Mundwinkel des Patienten eingelegt. Das Verbinderelement 12 hat dabei unter anderem die Funktion, die beiden Wangenansätze voneinander weg zu spreizen und somit eine möglichst große Mundöffnung mit einem sehr guten Zugang zur Mundhöhle bereitzustellen. Derartige doppelseitige Wangenhalter 10, auch als Doppelwangenhalter bezeichnet, sind insbesondere bei einer PZR hilfreich, da damit diese Therapie von einer einzigen Assistenzkraft mit einer entsprechenden Weiterbildung alleine ausgeführt werden kann, da auf diese Weise beide Hände für die Therapie zur Verfügung stehen. Die Doppelwangenhalter 10 kommen aber auch bei anderen Therapien zum Einsatz.

Ausgehend von diesen bekannten, zum Stand der Technik zu rechnenden Wangenhaltern 1, 10 gemäß den FIG. 1, 2 werden nachfolgend nunmehr erfindungsgemäß weitergebildete Wangenhalter 20 näher erläutert. Diesen ist gemeinsam, dass sie zu Erhöhung der Sicherheit des behandelnden Personals oder anderer sich in der Nähe befindlicher Personen jeweils mit einem Absaugsystem für Aerosole verbindbar sind, wobei eine Anzahl ihrer jeweiligen Lippen-Halteschalen 2 in der Nähe der jeweils vorgesehenen Lippenkontur mit einer Anzahl von zur Verbindung mit dem Absaugsystem vorgesehenen Ansaugöffnungen 22 versehen ist.

Eine Absaugung insbesondere von Aerosolen möglichst in unmittelbarer Nähe der Lippen eignet sich nämlich hervorragend, um während der Behandlung zu vermeiden, dass Aerosole aus der Mundhöhle austreten. Hierbei ist es besonders vorteilhaft, wenn die Absaugung zumindest nahezu konstant auf die gesamte Lippenstrecke verteilt ist. Auf diese Weise wird am äußeren Rand der Mundhöhle eine relativ konstante Absaugströmung erzielt, welche zur Folge hat, dass sich relativ zentral in der Mundhöhlenöffnung ein Luftstrom in Richtung in die Mundhöhle hinein ergibt. Dieser wirkt der Bewegungsrichtung der Aerosole, welche die Mundhöhle verlassen, entgegen, so dass sie verlangsamt werden und von der Absaugung erfasst werden können. Auf diese Weise kann vermieden werden, dass die Aerosole die Mundhöhle verlassen. In einer sehr einfachen Ausführung der Erfindung wird eine solche Absaugung in Form der Ansaugöffnungen 22 entlang der Lippen auf mindestens einer Lippen-Halteschale 2 eines ein- oder doppelseitigen Wangenhalter angeordnet. Das eigentliche, mit den Ansaugöffnungen 22 verbundene Absaugsystem 24 kann dabei beispielsweise ein mit den Ansaugöffnungen 22 verbundenes, in der Figur lediglich schematisch dargestelltes Rohr- oder Schlauchsystem 26 umfassen, über das über die Ansaugöffnungen 22 sowohl Luft als auch die Aerosole eingesaugt werden können, und das seinerseits an eine geeignet gewählte Absaugpumpe 28 angeschlossen ist.

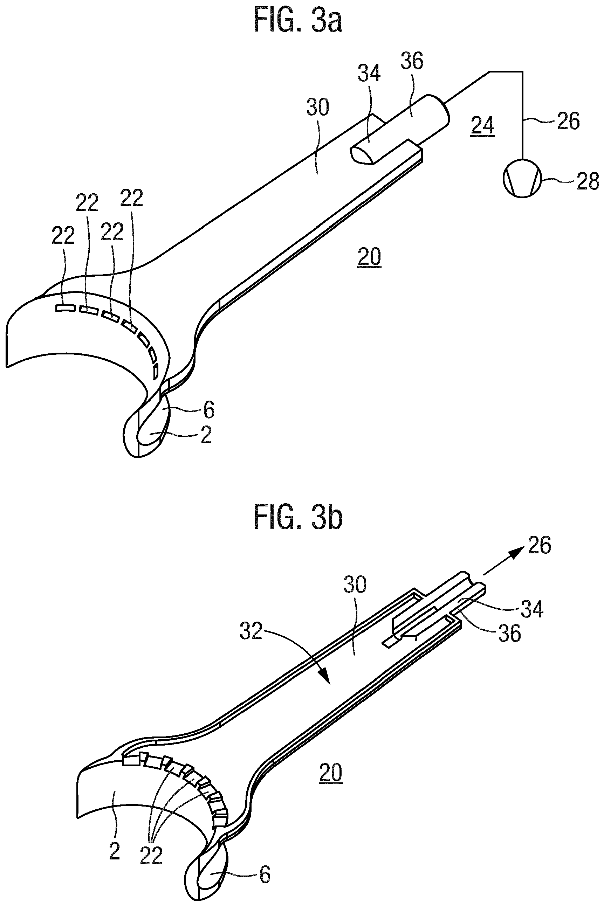

Ein einseitig ausgestalteter Wangenhalter 20 in einer ersten Ausführungsform der Erfindung ist in FIG. 3 gezeigt. In dieser Ausführungsform ist die Absaugung in den Wangenhaltergriff 30 des Wangenhalter 20 integriert. Wie den FIG. 3a, 3b entnehmbar ist, sind die Ansauglöcher 22 in die Lippen-Halteschale 2 in Positionen entlang der erwarteten Lippenkontur eingebracht. Zur Bereitstellung des Absaugsystems ist der Wangenhaltergriff 30 hohl ausgeführt, so dass der Hohlraum 32 im Inneren die mit den Ansauglöchern 22 verbundene Absaugung bildet. Die Ansaugöffnungen 22 in der Lippen-Halteschale 2 weisen dabei in Richtung der Mundhöhle. Im gezeigten Ausführungsbeispiel ist der Wangenhalter 20 mit integrierter Absaugung dabei zweiteilig ausgeführt, wobei in FIG. 3b in der Art einer Schnittdarstellung eines der beiden Teile gezeigt ist. Der gebildete Hohlraum 32 ermöglicht, dass über die Ansaugöffnungen 22 Luft, Flüssigkeiten, Feststoffe und oder Aerosole angesaugt und sodann durch den Wangenhaltergriff 22 und einen an diesem endseitig angeordneten Absauganschluss 34 abtransportiert werden können. Der Absauganschluss 34 ist seinerseits mit der externen Saugvorrichtung, also insbesondere der Absaugpumpe 28, verbindbar und weist dazu vorzugsweise einen an das Schlauchsystem 26 anschließbaren Standardanschluss 36 für dentale Einheiten bzw. dentale Stühle zur Kontaktierung an die Saugvorrichtung auf. Auf diese Weise kann der Wangenhalter 20 mit integrierter Absaugung an jeden beliebigen Absauganschluss von Dentaleinheiten oder an eine andere Absaugung für dentale Anwendungen angeschlossen werden.

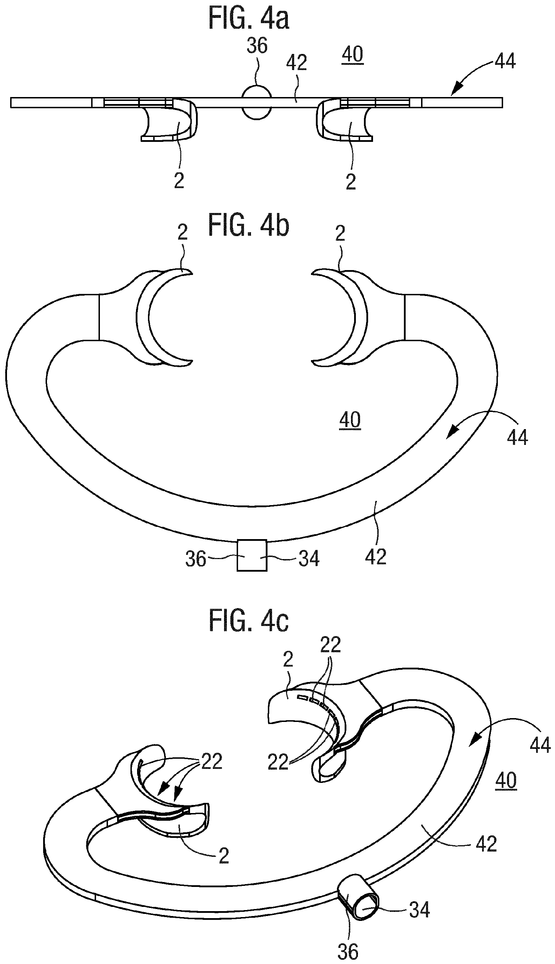

In FIG. 4 ist hingegen ein doppelseitig ausgestalteter Wangenhalter 40 in einer weiteren Ausführungsform der Erfindung gezeigt. Diese Ausführung entspricht im Kern der Ausgestaltung des Doppelwangenhalters 10 gemäß FIG. 2 mit der Modifikation, dass auch hier die Lippen-Halteschalen 2 mit Ansauglöchern 22 versehen und das Verbinderelement 12 zur Bildung eines Absaugkanals hohl ausgeführt ist, so dass auch dieser Wangenhalter 40 mit integrierter Absaugung ausgeführt ist. Hierbei sind somit die beiden Lippen-Halteschalen 2 mit Absaugung über einen Wangenansatzverbinder 42 mit integriertem Hohlraumsystem 44 miteinander verbunden. Über das Hohlraumsystem 44 werden die abgesaugten Medien bis hin zu dem Absauganschluss 34 transportiert, um von dort über einen Schlauch und eine Absaugeinheit entsorgt zu werden.

Die geometrische Form der Ansaugöffnungen 22 kann unterschiedlich ausgeführt und insbesondere angepasst an einen besonderen Behandlungszweck geeignet gewählt sein. In den FIG. 3 und 4 sind die Ansaugöffnungen 22 als Rechteck dargestellt. Sie können aber auch rund, quadratisch, oval, als Polygon oder einer Kombination aus mindestens zwei dieser Formen ausgeführt sein. Es ist kann auch sinnvoll sein, eine Linie oder eine andere bereit erwähnte Geometrieform von kleinen Öffnungen nebeneinander anzubringen, beispielsweise eine Line mit runden Öffnungen, welche verhindern, dass zu große Partikel bzw. Elemente eingesaugt werden können.

Bei der Ausführung der Absaugung als Doppelwangenhalter 40 mit integrierter Absaugung ist es zweckmäßig und wird als eigenständig erfinderisch angesehen, die Strecke der Mundhöhlenöffnung bzw. die Strecke der Lippen möglichst in ihrer Gänze oder vollständig mit einer Absaugung zu versehen, um eine besonders hohe Effizienz der Absaugung zu erreichen. Die "Lippenstrecke" wird dabei vorliegend definiert als die Gesamtstrecke gebildet aus der Strecke, welche sich aus der Oberlippe und die Strecke, welche sich aus der Unterlippe ergibt. Aufgrund der sehr individuellen Lippenstrecke der unterschiedlichen Patienten ist es nicht immer möglich, die gesamte Lippenstrecke mit Absaugöffnungen zu versehen. Besonders bevorzugt und in als eigenständig erfinderisch angesehener Ausgestaltung ist allerdings mindestens 25 %, vorzugsweise 50 % und besonders bevorzugt 75 % der Lippenstrecke mit einer Absaugung bzw. in der Nähe platzierten Ansaugöffnungen 22 versehen.

Alternativ kann der erfindungsgemäße Wangenhalter auch als System umfassend mehr als zwei Lippen-Halteschalen 2 mit und teilweise auch ohne integrierte Absaugung ausgeführt sein. Dies könnte sich insbesondere bezogen auf die Handhabung am Patienten als besonders günstig erweisen. Es ist auch möglich, die Wangenansätze mit einem Leitungssystem zu verbinden welche ebenfalls Absaugöffnungen, Luftauslassöffnungen, Abstandssensoren und oder Handschuhabhalterippen aufweisen. Darüber hinaus kann der Absauganschluss auch direkt an einem der Wangenansätze oder an dem eventuell zum Einsatz kommenden Leitungssystem angebracht sein. Der beanspruchte Wangenhalter mit integrierter Absaugung kann einstückig oder mehrstückig aufgeführt sein. Hierbei kann auch das Absaugsystem separat an den Wangenhalter anbringbar ausgeführt sein.

In einer weiterhin besonders bevorzugten Variante ist der Wangenansatz 2 über die gesamte Lippenstrecke ausgeführt. Dies bedeutet, dass der Wangenansatz entlang der Lippenstrecke geschlossen ist. Er kann aber auch an ein oder mehreren Stellen entlang der Lippenstrecke unterbrochen sein.

Bei einer sehr starken Absaugleistung besteht die theoretische Möglichkeit, dass die von dem behandelnden Personal verwendeten Handschuhe über die Ansaugöffnungen 22 angesaugt werden und damit das Personal in der Handhabung behindern könnten.

Zwar liegen die Handschuhe meist sehr passgenau an den Händen an, jedoch kann es trotzdem zum Einsaugen kommen. Bezogen auf die auszuübende Therapie ist dies ein störender und unangenehmer Nebeneffekt für das behandelnde Personal. Zur Vermeidung dieses Effektes bzw. zur Reduzierung dieser Unannehmlichkeit sind in einer besonders bevorzugten, ebenfalls als eigenständig erfinderisch angesehen Ausführung in der Nähe der Ansauglöcher 22 Abstandshalter bzw. Abhalterippen 46 vorgesehen. Diese führen dazu, dass, wenn die Handschuhe sehr passgenau auf den Händen sitzen, die Handschuhe keinen direkten Kontakt zu den Ansaugöffnungen 22 haben können.

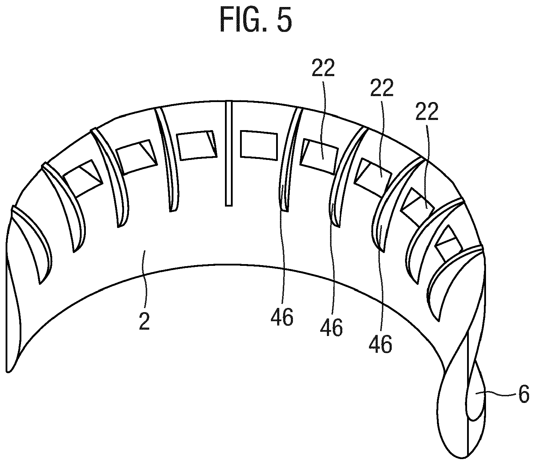

Eine derartige Ausführungsvariante einer Lippen-Halteschale 2 mit integrierter Absaugung und mit einer Anzahl angeformter Abhalterippen 46 ist in FIG. 5 dargestellt. Hierbei sind die Handschuhabhalterippen 46 jeweils zwischen zwei benachbarten Ansaugöffnungen 22 angeordnet, so dass die Vermeidung oder zumindest Verringerung eines Kontaktes der Handschuhe mit den Absaugöffnungen 22 besonders zuverlässig erreicht ist. Die in FIG. 5 gezeigte Ausführung der Handschuhabhaltung zeigt dabei nur die innere Schale eines Wangenansatzes 20, 40 mit integrierter Absaugung, und sie stellt nur ein Beispiel für eine solche Ausführung dar. Es besteht auch die Möglichkeit, gerade oder gebogene Rippen oder anders geformte Handschuhabhalter zu verwenden. Weiterhin kann die hiermit angestrebte Funktion, also die Vermeidung eines direkten flächigen Kontakts der Finger oder Handschuhe mit den eigentlichen Ansaugöffnungen 22, auch darüber erreicht werden, dass die Ansaugöffnungen 22 selbst in der einer Vertiefung innerhalb einer räumlich abgesenkten Kontur, beispielsweise einer Nut, Rille oder Vertiefung, angeordnet sind. Insbesondere können sie sich in der in die Lippen-Halteschale 2 eingeprägten Fläche befinden, welche in ihrer Fläche mindestens doppelt so groß ist wie die Fläche der Ansaugöffnungen 22 selbst. Für alle Ausführungen mit dem Ziel der Handschuhabhaltung ist es wünschenswert, dass die vorderen Kanten der Schutzvorrichtung mindestens 1,0 mm, vorzugsweise 2,0 mm und besonders bevorzugter Weise 3,0 mm über die Fläche der jeweiligen Ansaugöffnung 22 hervorstehen bzw. die jeweilige Ansaugöffnung 22 gegenüber der "freien Fläche" der Lippen-Halteschale 2 um die entsprechenden Beträge abgesenkt positioniert ist.

Die Wangenhalter 20 mit integrierter Absaugung und insbesondere die Doppelwangenhalter 40 mit integrierter Absaugung und optionalen Handschuhabhalterippen können besonders effizient arbeiten, wenn die Absaugleitung bzw. das Absaugvolumen möglichst in Summe mit der Absaugleitung bzw. dem Absaugvolumen der unter Umständen zusätzlich eingebrachten absaugenden Instrumente mindestens gleich hoch ist wie das in die Mundhöhle eingebrachte Volumen an Flüssigkeiten, Gasen und Feststoffen, meist in Form von Luft, Wasser und Pulver (bei einer PZR). Zusätzlich kann auch das Ausatemvolumen des Patienten mit in die Berechnung des minimal nötigen Absaugvolumens einbezogen werden. Meist ist es jedoch so, dass der Patient während des Einbringens von Flüssigkeit, Gasen und oder Feststoffen (z. B. Kühlung beim Beschleifen, Luft-Pulver-Wasser-Spray [PZR], Luft-Wasser Gemisch, Luft etc.) mit der Zunge den Rachenraum verschließt und durch die Nase atmet, um das Verschlucken der eingebrachten Medien zu vermeiden. Das nötige Absaugvolumen sollte folglich mindestens 120 %, vorzugsweise mindestens 150 % und in besonders bevorzugter Ausgestaltung 200 % des Einbringvolumens betragen. Die entsprechenden Volumina können von der Dentaleinheit über Messungen an der eigenen Einheit oder an zusätzlich verwendeten Einheiten ermittelt werden und auf diese Weise das Absaugvolumen steuern oder Regeln. Dies kann auch von einer externen Einheit übernommen werden. Das Absaugsystem 24 und insbesondere die diesem zugeordnete Absaugpumpe 28 sind dabei für eine Saugleistung von mindestens 750 l/min ausgelegt, so dass die vorstehend genannten Kriterien ohne Weiteres erfüllt sind.

Um massereichere Medien, welche beim Herausschleudern aus der Mundhöhle eventuell nicht von dem Absaugstrom erfasst werden, ebenso zuverlässig zu handhaben, ist in vorteilhafter und als eigenständig erfinderischer Ausgestaltung vorgesehen, diese in ihrer sich ergebenden Flugbahn abzulenken und in Richtung des Absaugstroms zu bewegen, damit sie von diesem erfasst und abgesaugt werden können. Hierbei sollten die Wangenansätze zum einen die schon erwähnten Ansaugöffnungen 22 aufweisen, und zum anderen ein Luft-Zuführsystem, das durch eingespeiste Luft den aus der Mundhöhle abströmenden Abgasstrom in Richtung der Randbereiche der Mundöffnung und somit hin zu den dort positionierten Ansaugöffnungen ablenken kann. Hierzu sind in vorteilhafter Ausgestaltung zusätzlich zu den Ansaugöffnungen 22 an der jeweiligen Lippen-Halteschale 2 eine Anzahl von eingangsseitig mit einem Überdrucksystem verbundenen Luft-Ausströmöffnungen angeordnet. In besonders bevorzugter Ausgestaltung ist dabei das Ensemble aus Ansaugöffnungen 22 und Ausströmöffnungen derart ausgestaltet, dass die Gesamtfläche der Ausströmöffnungen kleiner ist als die Gesamtfläche der Absaugöffnungen 22, insbesondere um eine hohe Luftaustrittsgeschwindigkeit zu erhalten.

In einfachen Ausführungsvarianten sind die Ansaugöffnungen 22 entweder entlang der Oberlippe, entlang der Unterlippe, entlang der Lippe des zweiten und dritten Quadranten oder des ersten und des vierten Quadranten angeordnet. Es besteht auch die Möglichkeit, eine Anordnung in den Lippenbereichen des ersten und dritten bzw. zweiten und vierten Quadranten zu wählen. Die Luftaustrittöffnungen befinden sich jeweils gegenüberliegend. In einer bevorzugten Ausführung sitzen die Luftauslassöffnungen zwischen den Bereichen der Ansaugöffnungen 22. Zusätzlich sind die Luftauslassöffnungen bezogen auf den Lippenverlauf auf der Lippenstrecke zusätzlich gegenüber den Ansaugöffnungen 22 positioniert. Auf diese Weise kann erreicht werden, dass beim Einbringen von Instrumenten, Fingern oder Händen nicht ein Teilbereich der Mundhöhle ausschließlich mit Luftdruck beaufschlagt wird, was dem ursprünglichen Grundgedanken der Vermeidung des Austritts von Aerosolen aus der Mundhöhle entgegenwirken würde. Für eine solche Ausführungsvariante ist es vorteilhaft, in oder an den Wangenhalter 20 bzw. Doppelwangenhalter 30 neben dem Absaugleitungssystem noch ein Überdruckleitungssystem mit zu integrieren und einen Anschluss dafür vorzusehen. Das sich ergebende Luftaustrittsvolumen sollte vorteilhafter Weise mit in die Berechnung des notwendigen Absaugvolumens einbezogen werden.

Während der Behandlung bzw. während der Therapie müssen Instrumente, Finger und oder Hände in die Mundhöhle eingebracht werden. Unabhängig von der verwendeten und bereits beschriebenen Ausführungsvariante (Absaugung mit oder ohne Luftaustritt, Wangenhalter nach FIG. 1 oder FIG. 2 etc.) wird das Einbringen von Instrumenten, Fingern und/oder Händen in die Mundhöhle die Absaugeffizienz beeinträchtigen und unter Umständen nicht in allen noch offenen Zugängen zur Mundhöhle optimal sein. Zur Optimierung hierfür können in die Lippen-Halteschalen 2 entlang der Lippenstrecke Abstandssensoren angebracht sein, welche die Position der in die Mundhöhle ragenden Instrumente, Finger und/oder Hände erfassen. Basierend auf den daraus ermittelten Abstands- oder Positionsdaten kann für jeden noch zur Mundhöhle offenen Bereich die Absaugleistung bzw. das Absaugvolumen, auch in Kombination mit der Ermittlung des optimalen Luftaustritts, berechnet und gesteuert oder geregelt werden. Für eine optimale Effizienz ist es dann auch vorteilhaft, dass die Ansaugöffnungen 22 und die Luftaustrittsöffnungen in mehrere Gruppen unterteilt werden, welche dann auch einzeln ansteuerbar sein sollten.

Bezüglich der Problematik des Ansaugens von Handschuhen bzw. dem Verschließen und eventuellen Spritzens von Medien beim Verschließen von Luftaustrittsöffnungen kann auch eine Über-/Unterdruckmessung in den jeweiligen Absaugleitungen bzw. Druckleitungen stattfinden, welche im Bedarfsfall die Saug- bzw. Luftaustrittsleistung entsprechend anpassen.

Ein alternatives, besonders bevorzugtes Ausführungsbeispiel eines erfindungsgemäßen Wangenhalters 50 wird nachfolgend unter Bezugnahme auf und als erfinderische Weiterbildung eines bekannten, bereits am Markt unter der Produktbezeichnung "OptraGate^{®}" erhältlichen Wangenhalters 52 näher erläutert.

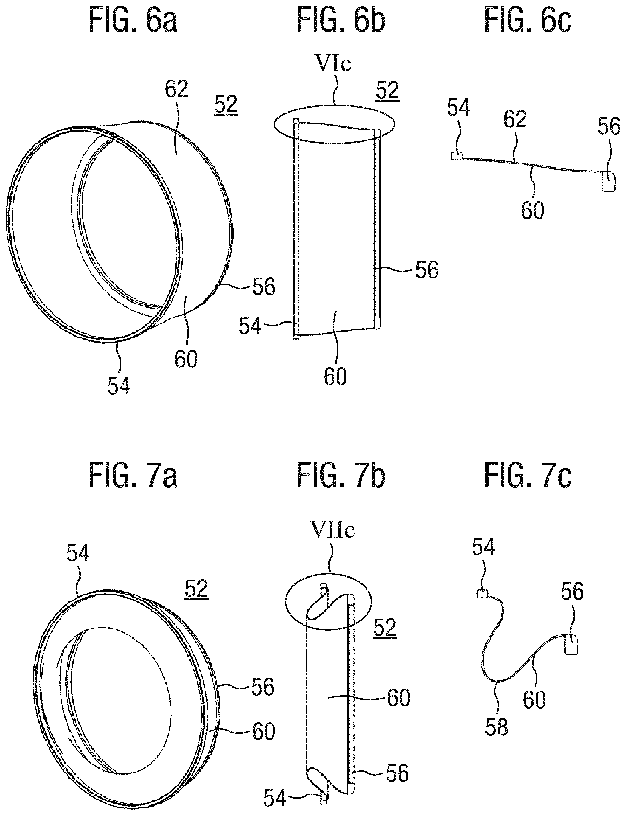

Der bekannte Wangenhalter 52 "OptraGate^{®}" ist in FIG. 6 in verkaufsfertigem Zustand in perspektivischer (FIG. 6a) und seitlicher Ansicht (FIG. 6b) sowie ausschnittsweise im Längsschnitt (FIG. 6c) gezeigt. Er umfasst einen äußeren oder extra-oralen Halte- oder Stützring 54 und einen inneren oder intra-oralen Halte- oder Stützring 56, die beide aus elastischem Material gefertigt und entsprechend verformbar sind. Die Stützringe 54, 56 sind über eine die Lippen-Halteschale 58 bildende verformbare Membran 60 mechanisch miteinander verbunden. Insbesondere sind die Stützringe 54, 56 dabei im Vergleich zur Membran 60 aus einem härteren Kunststoff wie beispielsweise einem ABS gefertigt und federnd ausgeführt. Wie der Schnittdarstellung in FIG. 6c entnehmbar ist, weist die Membran 60 im unbelasteten Zustand eine in Längsrichtung nahezu geradlinige Seitenwand 62 auf.

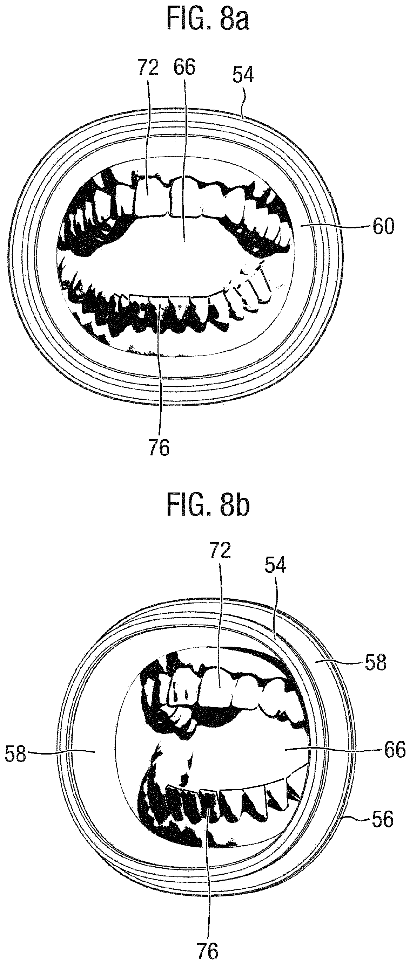

Zur Verwendung während der Behandlung eines Patienten wird der Wangenhalter 52 zunächst in den Patientenmund eingesetzt, wobei die Stützringe 54, 56 vorübergehend geeignet verformt werden. Dabei wird, wie dies in FIG. 7 in perspektivischer (FIG. 7a) und seitlicher Ansicht (FIG. 7b) sowie ausschnittsweise im Längsschnitt (FIG. 7c) und ganz besonders in FIG. 8 durch die ausschnittsweise Darstellung des Patientenmundes 64 deutlich wird, der innere Stützring 56 hinter der Lippe des Patienten positioniert, wohingegen der äußere Stützring 54 außerhalb der Lippenkontur verbleibt. Aufgrund der elastischen Rückstellkräfte und der federnden Ausgestaltung nehmen die Stützringe 54, 56 nach der Einbringung soweit möglich wieder ihre ursprüngliche Kontur ein, so dass sie die Membran 60 örtlich fixieren. Die Membran 60 verformt sich dabei in Längsrichtung und umfasst die Lippe des Patienten, wobei sich die Lippen-Halteschale 58 deutlich ausbildet.

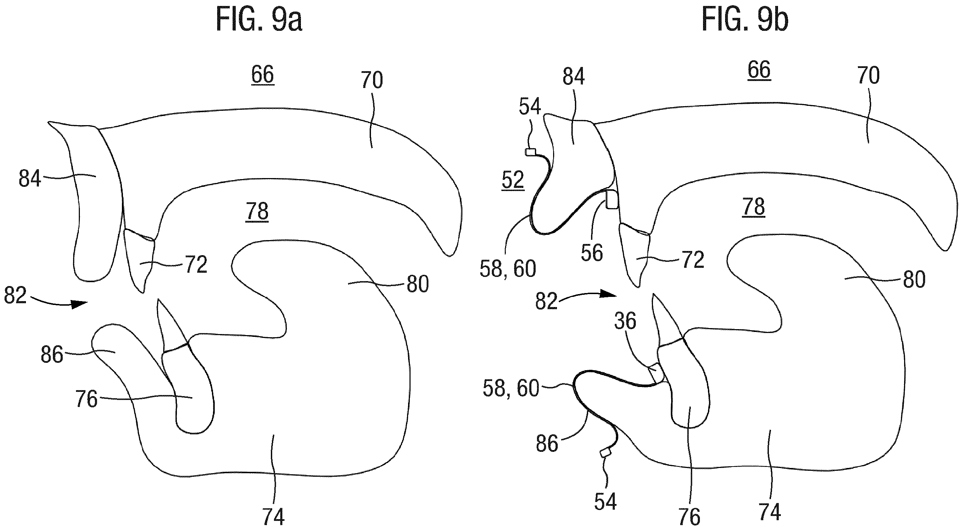

Zur weiteren Verdeutlichung ist in FIG. 9 ausschnittsweise der Kieferbereich 66 eines Patienten im Längsschnitt ohne (FIG. 9a) und mit (FIG. 9b) eingesetztem Wangenhalter 52 gezeigt. Dargestellt sind dabei der Oberkiefer 70 mit oberem Frontzahn 72 und der Unterkiefer 74 mit unterem Frontzahn 76 des Patienten, die in ihrer Gesamtheit die Mundhöhle 78 bilden. In der Mundhöhle 78 befindet sich weiterhin die Zunge 80. Die Mundöffnung 82, durch die hindurch ggf. das Ausatmen erfolgt, wird durch die Oberlippe 84 und die Unterlippe 86 begrenzt, die in ihrer Gesamtheit die Mundöffnung 82 vollständig umschließen. In der Darstellung nach FIG. 9b, mit eingesetztem Wangenhalter 52, wird deutlich, wie die Membran 60 Ober- und Unterlippe 84, 86 umfasst und damit die Lippen-Halteschale 58 bildet. Dabei ist auch deutlich erkennbar, dass in Folge des eingesetzten Wangenhalters 52 sowohl Ober- als auch Unterlippe 84, 86 nach vorne, also von der Mundhöhle 78 weg, gebogen sind, um die orale Zugänglichkeit zu optimieren.

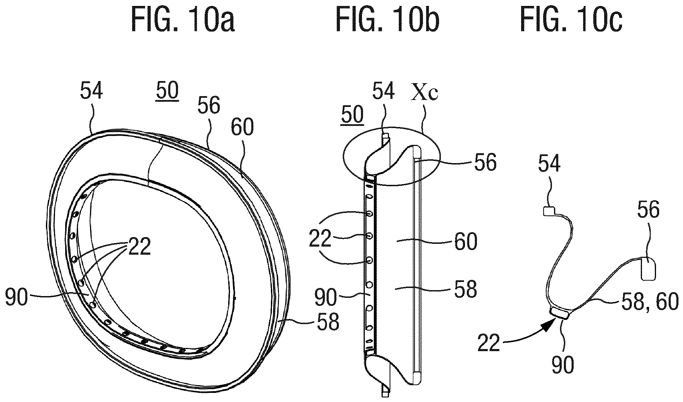

Ausgehend von diesem bekannten Wangenhalter 52 wird nachfolgend der erfindungsgemäß weitergebildete Wangenhalter 50 näher erläutert. Wie der Darstellung gem. FIG. 10 in eingesetztem Zustand in perspektivischer (FIG. 10a) und seitlicher Ansicht (FIG. 10b) sowie ausschnittsweise im Längsschnitt (FIG. 10c) entnehmbar ist, weist der gemäß diesem Ausführungsbeispiel der Erfindung weitergebildete Wangenhalter 50 an seiner die Lippen-Halteschale 58 bildenden Membran 60 einen daran angebrachten, beispielsweise angeformten, angeklebten, anvulkanisierten oder angeschweißten, Absaugkanal 90 auf. Der Absaugkanal 90 ist mit Ansaugöffnungen 22 versehen und andererseits in zu den vorstehend bereits beschriebenen Ausführungsformen analoger Weise gasseitig über das Schlauchsystem 26 mit dem Absaugsystem 24 verbunden und über dieses an die Absaugpumpe 28 angeschlossen.

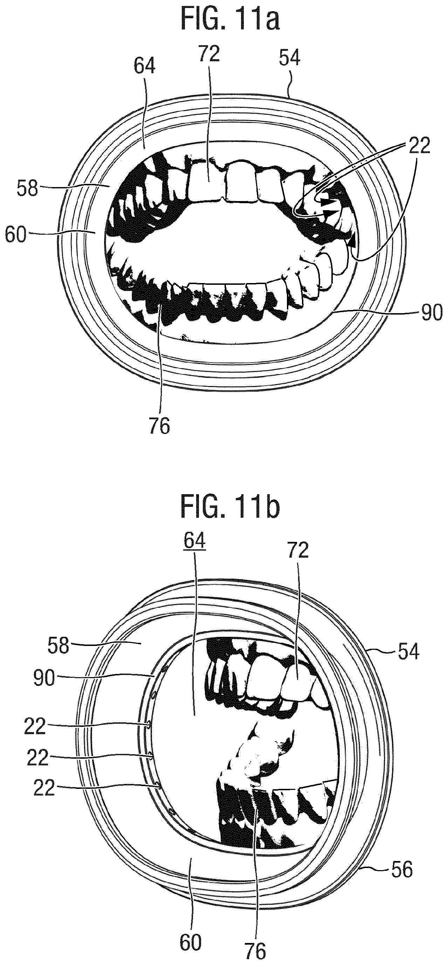

Wie in der Darstellung des Patientenmundes 64 mit eingesetztem Wangenhalter 50 gemäß dem bevorzugten Ausführungsbeispiel in FIG. 11 besonders deutlich erkennbar ist, kann insbesondere in dieser Ausführungsform der Absaugkanal 90 vollständig um die Mundöffnung 82 herum und somit vollständig entlang der durch die Oberlippe 84 und die Unterlippe 86 definierten Lippenstrecke geführt sein. Damit ist sichergestellt, dass in diesem Ausführungsbeispiel die gesamte Lippenstrecke mit Ansaugöffnungen 22 versehen ist.

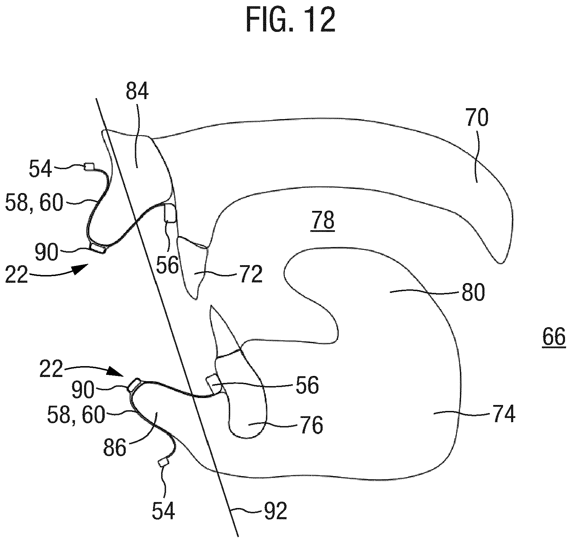

In FIG. 12 ist der Kieferbereich 66 des Patienten mit eingesetztem Wangenhalter 50 gemäß besonders bevorzugtem Ausführungsbeispiel gezeigt. Deutlich erkennbar ist hier unter anderem, dass gerade in dieser Ausführungsform die im Absaugkanal 90 angebrachten Ansaugöffnungen 22 räumlich unmittelbar an der durch die Lippen 84, 86 definierten Mundöffnung 82 positioniert sind. Insbesondere ist damit das erwünschte Kriterium, dass die Ansaugöffnungen 22 besonders nah, also höchstens 50 mm, vorzugsweise höchstens 25 mm und insbesondere höchstens 10 mm, versetzt zur die Position der Mundöffnung 82 repräsentierenden Trennebene zwischen dem sogenannten "intraoralen" oder inneren Bereich der Mundhöhle 78 und dem sogenannten "extraoralen" oder äußeren Bereich der Mundhöhle 78 positioniert sein sollten, problemlos erfüllt. In FIG. 12 ist diese Trennebene durch die Linie 92 repräsentiert.

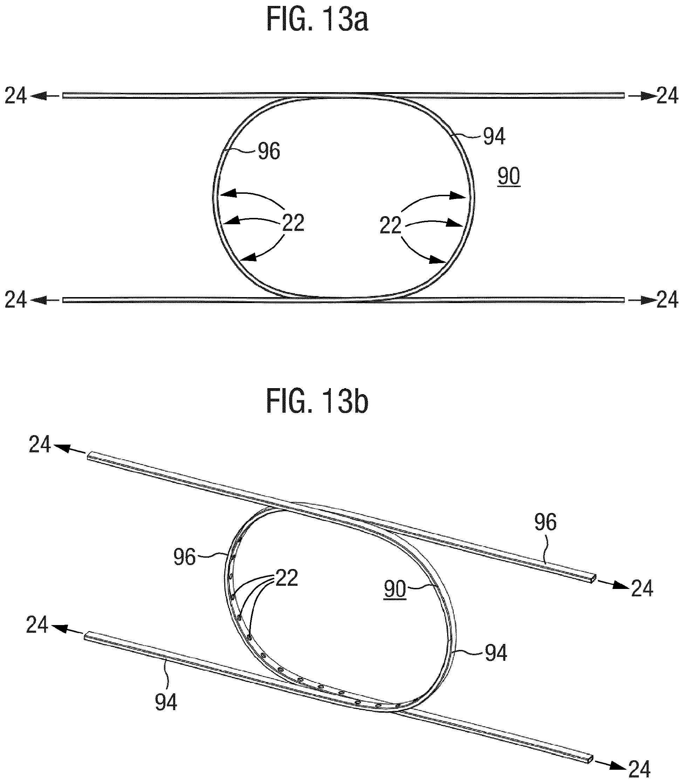

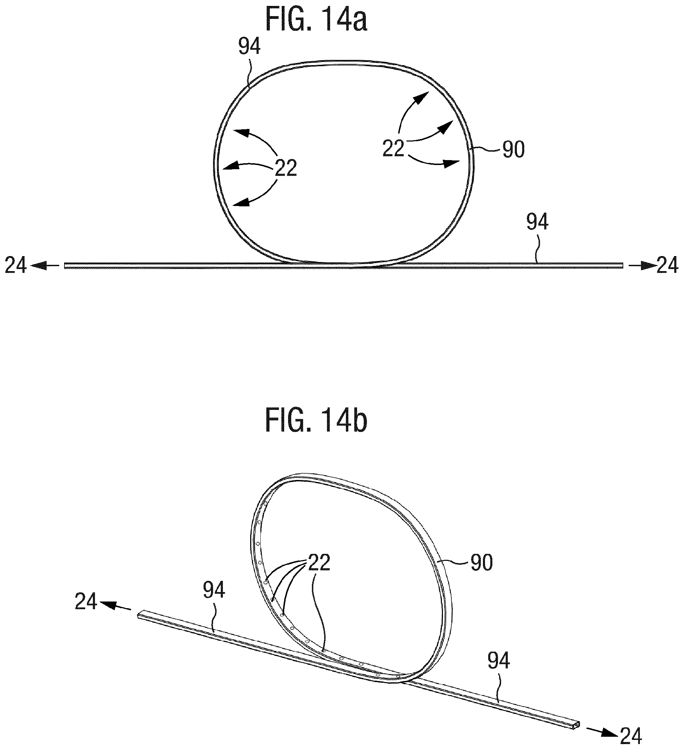

Der Absaugkanal 90 kann wie erwähnt an der Lippen-Halteschale 58 des Wangenhalters 50 angeformt sein. In einer weiteren, als eigenständig erfinderisch angesehenen Ausführungsform ist der Absaugkanal 90 aber durch eine Anzahl von Schlauchstücken 94, 96 gebildet, bevorzugt aus einem im Dentalbereich üblicherweise verwendeten Kunststoff-Material wie PVC, Latex, ABS oder Silikon. Zur Bildung einer die gesamte Lippenstrecke erfassenden Kontur kann dabei, wie dies in FIG. 13 in Frontal- (FIG. 13a) und perspektivischer (FIG. 13b) gezeigt ist, eine Kombination von zwei oder mehr geeignet überlappend angeordneten Schlauchstücken 94, 96 vorgesehen sein, die an der die Lippen-Halteschale 58 bildenden Membran 60 geeignet angebracht, beispielsweise angeschweißt, und gasseitig über das Schlauchsystem 26 mit dem Absaugsystem 24 verbunden und über dieses an die Absaugpumpe 28 angeschlossen sind. Alternativ kann dabei der Absaugkanal 90 natürlich auch durch ein einziges Schlauchstück 94 gebildet sein, wie dies in FIG. 14 in Frontal- (FIG. 14a) und perspektivischer (FIG. 14b) gezeigt ist. In dieser Variante ist das Schlauchstück 94 zur Bildung einer die gesamte Lippenstrecke erfassenden Kontur in der Art einer geschlossenen Schlaufe geführt und an der die Lippen-Halteschale 58 bildenden Membran 60 geeignet angebracht, beispielsweise angeschweißt, und gasseitig über das Schlauchsystem 26 mit dem Absaugsystem 24 verbunden und über dieses an die Absaugpumpe 28 angeschlossen.

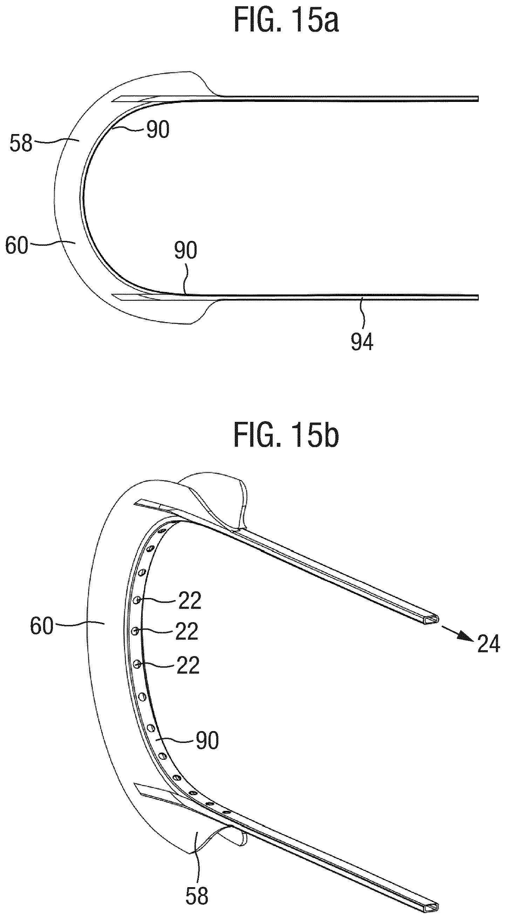

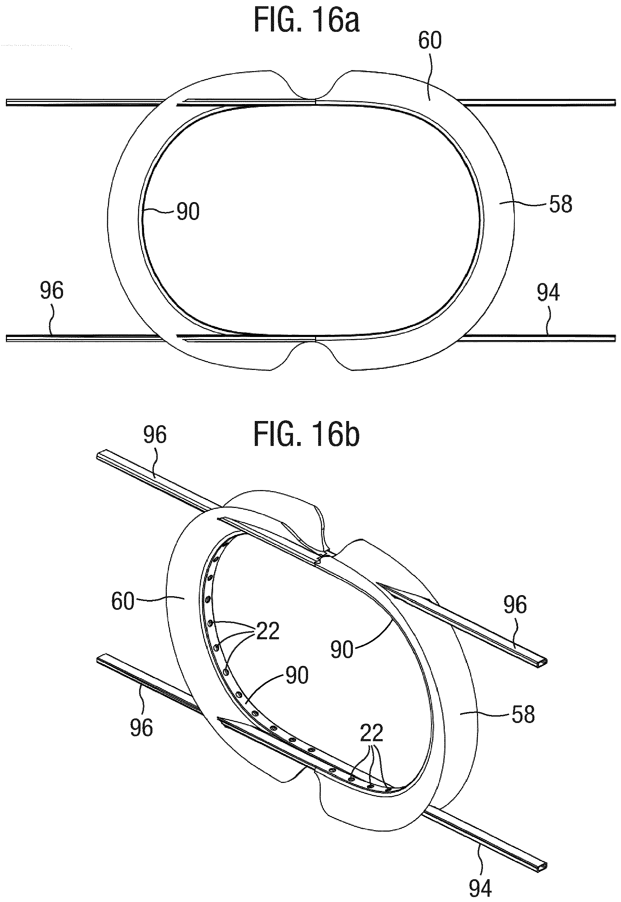

In ganz besonders bevorzugter Ausgestaltung sind die den Absaugkanal 90 bildenden Schlauch- oder Rohrstücke 94, 96, in der Funktionalität entsprechend der oben beschriebenen Ausgestaltung der Halte- oder Stützringe 54, 56, aus einem im Vergleich zum Material der Membran 60 härteren, insbesondere federnd verformbaren, Material wie beispielsweise einem ABS, hergestellt. Damit können sie beim Einsetzen des solchermaßen modifizierten Wangenhalters 50 in den Patientenmund vorübergehend verformt werden, nehmen anschließend aufgrund der federnden Ausgestaltung aber zumindest nahezu ihre urspüngliche Form wieder ein und können somit in der Art einer Doppelfunktion auch zur Stabilisierung und sicheren Positionierung des Wangenhalters 50 im Patientenmund beitragen. Ein solchermaßen als federnde Stützstruktur für den Wangenhalter 50 ausgestaltetes Rohr- oder Schlauchsystem ist in FIG. 15 in Frontal-(FIG. 15a) und perspektivischer (FIG. 15b) Ansicht gezeigt; eine alternative Ausführungsform davon zeigt FIG. 16.

### Bezugszeichenliste

- 1: Wangenhalter in einseitiger Ausführung
- 2: Lippen-Halteschale
- 4: Wangenhaltergriff
- 6: Lippenauflage
- 8: Pfeil
- 10: Wangenhalter in doppelseitiger Ausführung
- 12: Verbinderelement
- 20: Wangenhalter
- 22: Ansaugöffnung
- 24: Absaugsystem
- 26: Schlauchsystem
- 28: Absaugpumpe
- 30: Wangenhaltergriff
- 32: Hohlraum
- 34: Absauganschluss
- 36: Standardanschluss
- 40: Wangenhalter
- 42: Wangenansatzverbinder
- 44: Hohlraumsystem
- 46: Abhalterippe
- 50: Wangenhalter
- 52: bekannter Wangenhalter "OptraGate^{®}"
- 54, 56: Stützring
- 58: Lippen-Halteschale
- 60: Membran
- 62: Seitenwand
- 64: Patientenmund
- 66: Kieferbereich
- 70: Oberkiefer
- 72: Oberer Frontzahn
- 74: Unterkiefer
- 76: unterer Frontzahn
- 78: Mundhöhle
- 80: Zunge
- 82: Mundöffnung
- 84: Oberlippe
- 86: Unterlippe
- 90: Absaugkanal
- 92: Linie
- 94, 96: Schlauchstück

## Patentansprüche

1. Wangenhalter (20, 40, 50), insbesondere zum Offenhalten des Patientenmundes (64) während einer Behandlung im Mund- oder Rachenraum oder einer dentalen Behandlung, mit einer die Lippen des Patienten entlang der gesamten Lippenstrecke oder Lippenkontur vollständig aufnehmenden Lippen-Halteschale (2, 58), an der eine Anzahl von mit einem Absaugsystem (24) verbundenen Ansaugöffnungen (22)angeordnet sind, **dadurch gekennzeichnet dass** entlang der Lippenstrecke mindestens 50 %, vorzugsweise mindestens 75 %, der Lippenstrecke mit Ansaugöffnungen (22) versehen sind.

2. Wangenhalter (20, 40, 50) nach Anspruch 1, bei dem die Ansaugöffnungen (22) höchstens 25 mm, vorzugsweise höchstens 20 mm, besonders bevorzugt höchstens 10 mm, versetzt zur Trennebene zwischen dem inneren und dem äußeren Bereich der Mundhöhle (78) positioniert sind.

3. Wangenhalter (20, 40, 50) nach Anspruch 1 oder 2, bei dem die oder jede Lippen-Halteschale (2, 58) mit einer Anzahl von Abhalterippen (46) versehen ist.

4. Wangenhalter (20, 40, 50) nach einem der Ansprüche 1 bis 3, bei dem die Absaugleistung des Absaugsystems (24) derart gewählt ist, dass der abgesaugte Volumenstrom mindestens 125 %, vorzugsweise mindestens 150 %, besonders bevorzugt mindestens 200 %, des Volumenstroms von während der Behandlung zugeführten Medien beträgt.

5. Wangenhalter (50) nach einem der Ansprüche 1 bis 4, mit einem äußeren Halte- oder Stützring (54) und einem inneren Halte- oder Stützring (56), die beide aus elastischem Material gefertigt und entsprechend verformbar und über eine die Lippen-Halteschale (58) bildende verformbare Membran (60) mechanisch miteinander verbunden sind.

6. Wangenhalter (50) nach Anspruch 5, an dessen die Lippen-Halteschale (58) bildender Membran (60) ein mit den Ansaugöffnungen (22) versehener Absaugkanal (90) angebracht ist.

## Claims

1. A cheek retractor (20, 40, 50), in particular for holding open a patient's mouth (64) during a treatment in the oral cavity or pharyngeal zone or during a dental treatment, said cheek retractor comprising a lip support shell (2, 58), which fully receives the lips of the patient along the entire lip extent or lip contour and on which there are arranged a number of suction openings (22) connected to an extraction system (24), **characterized in that**, along the lip extent, at least 50%, preferably at least 75%, of the lip extent is provided with suction openings (22).

2. The cheek retractor (20, 40, 50) according to claim 1, in which the suction openings (22) are positioned at most 25 mm, preferably at most 20 mm, particularly preferably at most 10 mm offset in relation to the parting plane between the inner and the outer region of the oral cavity (78).

3. The cheek retractor (20, 40, 50) according to claim 1 or 2, in which the or each lip support shell (2, 58) is provided with a number of spacer ribs (46).

4. The cheek retractor (20, 40, 50) according to any one of claims 1 to 3, in which the extraction power of the extraction system (24) is selected in such a way that the extracted volume flow is at least 125%, preferably at least 150%, particularly preferably at least 200% of the volume flow of media supplied during the treatment.

5. The cheek retractor (50) according to any one of claims 1 to 4, with an outer holding or support ring (54) and an inner holding or support ring (56), which are both made of elastic material and are mechanically connected to one another correspondingly deformably and by means of a deformable membrane (60) forming the lip support shell (58).

6. The cheek retractor (50) according to claim 5, to the membrane (60) of which forming the lip support shell (58) there is attached an extraction channel (90) provided with the suction openings (22).

## Revendications

1. Écarteur de joue (20, 40, 50), en particulier pour maintenir ouverte la bouche du patient (64) pendant un traitement dans l'espace de la bouche ou du pharynx ou un traitement dentaire, comprenant une coque de maintien des lèvres (2, 58) recevant entièrement les lèvres du patient le long de toute l'étendue ou de tout le contour des lèvres, sur laquelle une pluralité d'ouvertures d'aspiration (22) reliées à un système d'aspiration (24) sont disposées, **caractérisé en ce que** le long de l'étendue des lèvres, au moins 50 %, de préférence au moins 75 % de l'étendue des lèvres est doté d'ouvertures d'aspiration (22).

2. Écarteur de joue (20, 40, 50) selon la revendication 1, dans lequel les ouvertures d'aspiration (22) sont positionnées décalées au plus de 25 mm, de préférence au plus de 20 mm, particulièrement de préférence au plus de 10 mm par rapport au plan de séparation entre la partie intérieure et la partie extérieure de la cavité buccale (78).

3. Écarteur de joue (20, 40, 50) selon la revendication 1 ou 2, dans lequel la ou chaque coque de maintien des lèvres (2, 58) est dotée d'un nombre de nervures de maintien (46).

4. Écarteur de joue (20, 40, 50) selon l'une des revendications 1 à 3, dans lequel la puissance d'aspiration du système d'aspiration (24) est ainsi choisie que le débit aspiré fait au moins 125 %, de préférence au moins 150 %, particulièrement de préférence au moins 200 % du débit de fluides alimentés pendant le traitement.

5. Écarteur de joue (50) selon l'une des revendications 1 à 4, comprenant une bague de maintien ou d'appui extérieure (54) et une bague de maintien ou d'appui intérieure (56) qui sont toutes deux fabriquées en matériau élastique et déformables de manière correspondante et reliées mécaniquement entre elles par une membrane (60) déformable formant la coque de maintien des lèvres (58).

6. Écarteur de joue (50) selon la revendication 5, sur la membrane (60) duquel formant la coque de maintien des lèvres (58) est placé un canal d'aspiration (90) doté d'ouvertures d'aspiration (22).
